# EUROPEAN PATENT APPLICATION

(11) **EP 4 772 362 A1**
(43) Date of publication of application: **08.07.2026**
(21) Application number: 24859234.7
(22) Date of filing: 19.07.2024
(51) Int. Cl.: B60C 19/00, G06V 10/25, G06V 10/50, G06V 10/764, G06V 10/82, G06V 20/60

(54) **TIRE DAMAGE EVALUATION DEVICE, TIRE DAMAGE EVALUATION METHOD, AND TIRE DAMAGE EVALUATION PROGRAM**

(30) Priority: 31.08.2023 JP 2023141594
(71) Applicant: BRIDGESTONE CORPORATION, Chuo-ku Tokyo 104-8340 (JP)
(72) Inventor: HAMATANI, Mitsuyoshi, Tokyo 104-8340 (JP); TAKEI, Kenichi, Tokyo 104-8340 (JP); HASEGAWA, Tomoo, Tokyo 104-8340 (JP)
(74) Representative: Marks & Clerk LLP
(86) International application number: PCT/JP2024/026042
(87) International publication number: WO 2025/047190

(57) **Abstract**

A tire damage evaluation apparatus comprises a processor configured to acquire a tread image obtained by imaging a tread portion of a tire and to quantify a damage state of a surface region of the tread portion based on the tread image.

## Description

### TECHNICAL FIELD

The present disclosure relates to a tire damage evaluation apparatus, a tire damage evaluation method, and a tire damage evaluation program.

### BACKGROUND

Conventionally, inspection of the external appearance and damage condition of tires has been performed by human visual inspection. In addition, evaluation of the surface condition of a tire from an image of the tire has been adopted, for example, in external appearance inspection of tires (see, for example, PTL 1).

### CITATION LIST

### Patent Literature

PTL 1: JP 2021-42988 A

### SUMMARY

### (Technical Problem)

However, the inspection method in which a human visually inspects the external appearance of a tire is greatly influenced by experience and know-how, lacks objectivity, and remains a qualitative evaluation. Furthermore, conventional image analysis techniques only detect whether a tire is a good product or a defective product on the production line, and have not been able to quantify and evaluate the surface condition of the tread portion of a tire after it has been put into use.

Therefore, in view of these points, an object of the present disclosure is to provide a tire damage evaluation apparatus, a tire damage evaluation method, and a tire damage evaluation program capable of quantifying and evaluating the surface condition of the tread portion of a tire.

### (Solution to Problem)

(1) A tire damage evaluation apparatus according to one aspect of the present disclosure comprises a processor configured to acquire a tread image obtained by imaging a tread portion of a tire and to quantify a damage state of a surface region of the tread portion based on the tread image.
(2) A tire damage evaluation apparatus according to one embodiment of the present disclosure is the tire damage evaluation apparatus described in (1) above, wherein the tread portion comprises a plurality of layers arranged in a radial direction of the tire, and the processor is preferably configured to generate a segmented image in which the surface region of the tread portion included in the tread image is segmented by a layer exposed in the surface region.
(3) A tire damage evaluation apparatus according to one embodiment of the present disclosure is the tire damage evaluation apparatus described in (2) above, wherein the plurality of layers preferably comprises an outer layer rubber configuring a tread surface of the tread portion, a metal cord layer disposed inward in the tire radial direction from the outer layer rubber, and an inner layer rubber positioned between the outer layer rubber and the metal cord layer.
(4) A tire damage evaluation apparatus according to one embodiment of the present disclosure is the tire damage evaluation apparatus described in (2) or (3) above, wherein the processor is preferably configured to execute processing to input the tread image of the tire to a first trained model, trained using first training data having tread images of a plurality of sample tires as input and segmented images obtained by segmenting a surface region of the sample tires included in the tread images by a layer exposed on the surface as output, and to output the segmented image of the tire.
(5) A tire damage evaluation apparatus according to one embodiment of the present disclosure is the tire damage evaluation apparatus described in any one of (2) to (4) above, wherein the processor is preferably configured to divide the segmented image of the tire into a plurality of strip-shaped regions extending in a width direction of the tire, to align positions of the plurality of strip-shaped regions so that positions in the width direction of the tread portion in the strip-shaped regions coincide, and to generate a histogram obtained by accumulating pixels of the plurality of strip-shaped regions for at least one layer exposed in the surface region at each position in the width direction.
(6) A tire damage evaluation apparatus according to one embodiment of the present disclosure is the tire damage evaluation apparatus described in any one of (1) to (5) above, wherein the processor is preferably configured to extract from the tread image at least one of a groove portion indicating a groove of the tread portion, a local damage portion indicating local damage of the surface region of the tread portion, and a repaired portion indicating a location of repaired damage that occurred previously in the tire.
(7) A tire damage evaluation apparatus according to one embodiment of the present disclosure is the tire damage evaluation apparatus described in any one of (1) to (6) above, wherein the processor is preferably configured to execute processing to input the tread image of the tire to a second trained model, trained using second training data having tread images of a plurality of sample tires as input and images of a local damage portion indicating local damage of a tread portion of the sample tires included in the tread images as output, and to output an image of the local damage portion of the tire.
(8) A tire damage evaluation apparatus according to one embodiment of the present disclosure is the tire damage evaluation apparatus described in (7) above, wherein the processor is preferably configured to calculate a ratio of an area of a region of the local damage portion to an area of the surface region of the tread portion.
(9) A tire damage evaluation apparatus according to one embodiment of the present disclosure is the tire damage evaluation apparatus described in (7) or (8) above, wherein the processor is preferably configured to calculate a barycenter position of a region of the local damage portion.
(10) A tire damage evaluation apparatus according to one embodiment of the present disclosure is the tire damage evaluation apparatus described in any one of (2) to (5) above, wherein the processor may quantify the damage state of the surface region of the tire, based on the tread image, in a portion in which an outermost layer of the tire, among the plurality of layers, is exposed.
(11) A tire damage evaluation apparatus according to one embodiment of the present disclosure is the tire damage evaluation apparatus described in (10) above, wherein the processor is preferably configured to extract an image of a region including the surface region of the tread portion from the tread image, to divide the image into images of a plurality of subregions, and to quantify the damage state of the surface region for the image of each subregion.
(12) A tire damage evaluation apparatus according to one embodiment of the present disclosure is the tire damage evaluation apparatus described in (10) or (11) above, wherein the processor is preferably configured to execute processing to input the tread image of the tire to a third trained model, trained using third training data having tread images of a plurality of sample tires as input and information quantifying the damage state of the surface region in a portion in which an outermost layer of the tire, among the plurality of layers included in the tread image, is exposed as output, and to output information quantifying the damage state of the surface region.
(13) A tire damage evaluation apparatus according to one embodiment of the present disclosure is the tire damage evaluation apparatus described in (12) above, wherein the damage state of the surface region in the third training data is preferably quantified based on at least one of a number of scratches included in the surface region and a depth of the scratches.
(14) A tire damage evaluation apparatus according to one embodiment of the present disclosure is the tire damage evaluation apparatus described in any one of (1) to (13) above, wherein the damage state includes a state of chipping and scratches of the tire, and the processor is preferably configured to estimate a wear characteristic of the tire based on information quantifying the state of the chipping and the scratches.
(15) A tire damage evaluation apparatus according to one embodiment of the present disclosure is the tire damage evaluation apparatus described in any one of (1) to (14) above, preferably comprising at least one of a display unit configured to display information quantifying the damage state of the surface region of the tread portion, and a communication unit configured to transmit the information to an external apparatus.
(16) A tire damage evaluation method according to one aspect of the present disclosure is a tire damage evaluation method executed by an information processing apparatus, comprising acquiring a tread image obtained by imaging a tread portion of a tire, and quantifying a damage state of a surface region of the tread portion based on the tread image.
(17) A tire damage evaluation program according to one aspect of the present disclosure is configured to cause a computer to execute processing to acquire a tread image obtained by imaging a tread portion of a tire and processing to quantify a damage state of a surface region of the tread portion based on the tread image.

### (Advantageous Effect)

According to the present disclosure, it becomes possible to quantify and evaluate the damage state of the surface region of the tread portion of a tire.

### BRIEF DESCRIPTION OF THE DRAWINGS

In the accompanying drawings:
FIG. 1 is a block diagram illustrating a schematic configuration of a tire damage evaluation system including a tire damage evaluation apparatus according to an embodiment of the present disclosure;
FIG. 2 is a cross-sectional view depicting an example of a tire to be evaluated by the tire damage evaluation system of FIG. 1;
FIG. 3 is a flowchart illustrating a method for generating a first trained model that segments the surface region of the tread portion based on images of a plurality of sample tires;
FIG. 4 is a diagram depicting an example of an image of the tread portion of a sample tire;
FIG. 5 is a diagram depicting an example of a segmented image generated from an image of the tread portion;
FIG. 6 is a diagram explaining a method for generating a histogram from a segmented image;
FIG. 7 is a diagram depicting an example of a groove portion, a local damage portion, and a repaired portion of a tire;
FIG. 8 is a flowchart illustrating a method for generating a third trained model that quantifies the damage level of the surface region of the tread portion based on images of a plurality of sample tires;
FIG. 9 is a diagram depicting an example of a tread image of a tire captured by an imaging unit;
FIG. 10 is a diagram depicting an example in which a process for determining a rectangular region in the tread image of FIG. 9 is executed;
FIG. 11 is a diagram depicting an example in which a damage region of the image of the rectangular region in FIG. 10 is masked and divided into subregions;
FIG. 12 is a diagram depicting an image in which a numerical value quantifying the damage state is assigned to each subregion of the tread image of FIG. 11;
FIG. 13 is a flowchart illustrating a tire damage evaluation method according to an embodiment of the present disclosure; and
FIG. 14 is a block diagram illustrating a schematic configuration of another tire damage evaluation system according to another embodiment of the present disclosure.

### DETAILED DESCRIPTION

Tires used on vehicles operating in special environments such as mines are prone to damage, including chipping and scratches on the surface of the tread portion, due to traveling on roads other than paved roads. When minor damage occurs to a tire, there is concern that such damage may serve as a starting point for rapid progression of tire wear. By quantitatively understanding the relationship between damage occurring to the tire and the progression of tire wear, it is possible to elucidate the relationship between tire damage and tread pattern, and to utilize this in tire design. Furthermore, it is expected that, by estimating the appropriate timing for tire rotation or replacement based on the damage state of the tire, information can be provided to tire users.

In the present application, "damage" means that the normal state is at least partially impaired. "Damage" to the tire surface includes wear, chipping, and scratches on the tire surface. Wear of the tire surface refers to a state in which the tire surface is abraded or shaved off due to friction with the ground. Chipping of the tire surface refers to a state in which a part of the tire surface is missing. Scratches on the tire surface refer to a state in which abrasions, cuts, or the like have occurred on the tire. In the present application, "local damage" refers to chipping, gouging, and scratches, etc., that occur in a relatively narrow area and can be identified in terms of position and range by an operator from an image of the tire surface.

Hereinafter, embodiments of the present disclosure will be described with reference to the drawings.

### (Tire Damage Evaluation System)

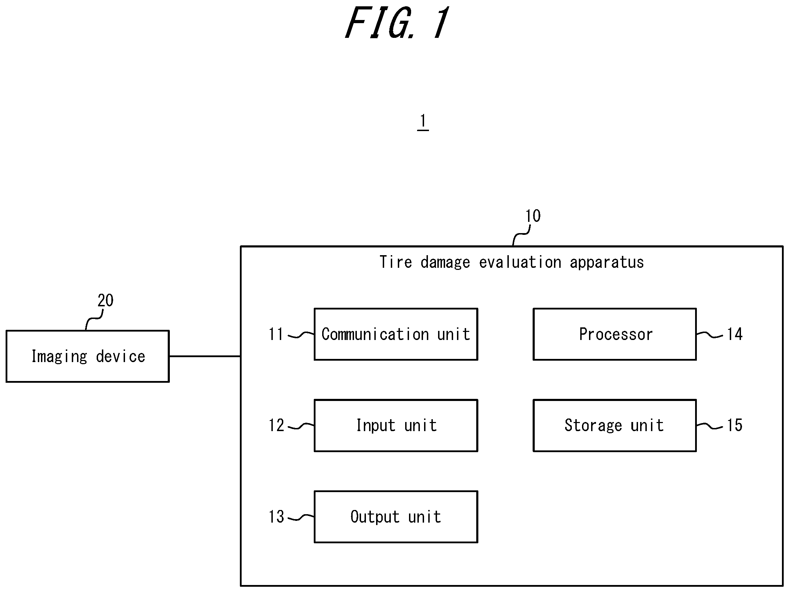

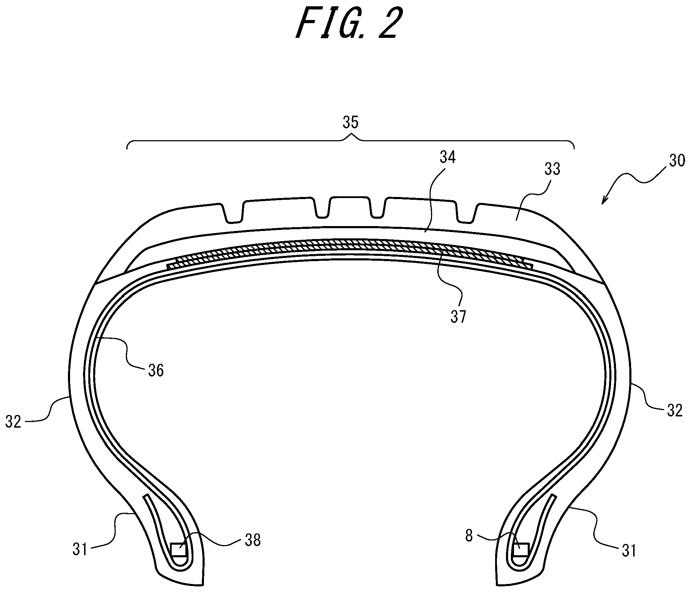

As illustrated in FIG. 1, a tire damage evaluation system 1 according to an embodiment of the present disclosure includes a tire damage evaluation apparatus 10 and an imaging device 20. A cross-sectional view of an example of a tire 30 to be evaluated by the tire damage evaluation system 1 is depicted in FIG. 2. In the tire damage evaluation system 1, the tire damage evaluation apparatus 10 analyzes and quantifies the damage state of the surface region of the tread portion 35 of the tire 30 based on an image of the tread portion 35 of the tire 30 captured by the imaging device 20. The tread portion 35 refers to the part of the tire 30 that is in direct contact with the road. Hereinafter, an image capturing the tread portion 35 will be referred to as a tread image.

The tire damage evaluation apparatus 10 is an information processing apparatus, such as a server computer, workstation, or PC (Personal Computer). The tire damage evaluation apparatus 10 may be installed at the user's site or may be located remotely via a network. Furthermore, the components and functions of the tire damage evaluation apparatus 10 described below may be distributed across multiple different hardware devices. Additionally, the tire damage evaluation apparatus 10 may be a small information processing device such as a portable information terminal or smartphone. In the embodiment described below, the tire damage evaluation apparatus 10 is described as a stationary computer. The tire damage evaluation apparatus 10 acquires tread images from the imaging device 20 and executes processing including image processing.

The imaging device 20 is provided with an optical system and an imaging element. The imaging element includes a CCD image sensor (Charge-Coupled Device Image Sensor) and a CMOS image sensor (Complementary MOS Image Sensor). The imaging element converts an image formed on its light-receiving surface by the optical system into an electrical signal. In the following embodiment, the imaging device 20 includes a set of an optical system and an imaging element, and captures the tread portion 35 of the tire 30 from one direction with the tire 30 removed from the vehicle and laid flat. However, the imaging device 20 may be configured to include multiple sets of optical systems and imaging elements and to capture the tread portion 35 from multiple directions. The imaging device 20 may be configured to capture the tire 30 from all directions (360 degrees) along the circumferential direction of the tire 30. The imaging device 20 may be a digital camera or a portable information terminal equipped with a camera. The imaging device 20 may also be a device provided exclusively for the tire damage evaluation system 1.

### (Configuration of the Tire Damage Evaluation Apparatus)

In one embodiment, the tire damage evaluation apparatus 10 includes a communication unit 11, an input unit 12, an output unit 13, a processor 14, and a storage unit 15.

The communication unit 11 provides a communication function for communicating with external devices of the tire damage evaluation apparatus 10. The communication unit 11 includes a communication module for connecting to a communication network such as the Internet. The communication unit 11 may include a communication module compatible with mobile communication standards such as 4G (4^{th} Generation) or 5G (5^{th} Generation). The communication unit 11 may include a communication module compatible with wired LAN standards (for example, 1000BASE-T). The communication unit 11 may include a communication module compatible with wireless LAN standards (for example, IEEE802.11). The communication unit 11 may include a communication module compatible with short-range communication such as Bluetooth and BLE.

The communication unit 11 may be configured to connect to the imaging device 20 via wired or wireless communication and to receive tread images captured by the imaging device 20. The communication unit 11 may be configured to enable transmission and reception of information with an information processing apparatus for machine learning, described later, via a network such as the Internet.

The input unit 12 includes one or more input interfaces for the tire damage evaluation apparatus 10. The input interfaces include, for example, physical keys, capacitive keys, pointing devices, touchscreens integrated with displays, microphones, and cameras. The input unit 12 includes an input interface for acquiring information from portable storage media such as memory cards. The tire damage evaluation apparatus 10 may acquire tread images captured by the imaging device 20 via storage media.

The output unit 13 includes one or more output interfaces. Output interfaces include, for example, displays, printers, and speakers. As the display, for example, an LCD (Liquid Crystal Display) or an organic EL (Electro Luminescence) display may be used. That is, the output unit 13 includes a display unit. The input unit 12 may include an output interface for writing information to portable storage media such as memory cards. The output unit 13 can output information obtained by the operation of the tire damage evaluation apparatus 10 to the user.

The processor 14 includes one or more processors. The processor may be a general-purpose processor such as a CPU (Central Processing Unit) that executes a program defining control procedures, or a dedicated processor specialized for specific processing. The processor 14 performs arithmetic processing for executing each function of the tire damage evaluation apparatus 10 and controls each component of the tire damage evaluation apparatus 10.

The processor 14 may execute various image processing operations on tread images acquired from the imaging device 20. The processor 14 can evaluate the damage state of the surface region of the tread portion 35 using at least one of a first to third trained models stored in the storage unit 15, which will be described later.

The storage unit 15 includes one or more memories. The memory may be, for example, a semiconductor memory, magnetic memory, or optical memory, but is not limited thereto and may be any memory. The semiconductor memory may include volatile memory such as RAM (Random Access Memory) and non-volatile memory such as ROM (Read Only Memory) and flash memory. The magnetic memory may include, for example, hard disks and magnetic tapes. The optical memory may include, for example, CD (Compact Disc), DVD (Digital Versatile Disc), and BD (Blu-ray Disc).

The storage unit 15 stores information necessary for the processor 14 of the tire damage evaluation apparatus 10 to perform processing, as well as information generated as a result of processing by the processor 14. For example, the storage unit 15 stores tread images captured by the imaging device 20, images processed from tread images, and information on the results of evaluating the damage state of the surface region of the tire 30 from the tread images. The storage unit 15 may store a tire damage evaluation program executed by the processor 14 of the tire damage evaluation apparatus 10 and the first to third trained models. The tire damage evaluation program may be provided in a form stored on a non-transitory storage medium such as a CD, DVD, or USB (Universal Serial Bus) memory.

### (Example Configuration of the Tire to be Evaluated)

With reference to the cross-sectional view in FIG. 2, an example of a tire 30 to be evaluated by the tire damage evaluation apparatus 10 will be described. In one embodiment, the tire 30 is a tire mounted on a vehicle used in special environments such as mines, as well as on special vehicles such as construction and civil engineering vehicles. Due to use in harsh environments, the tire 30 is susceptible to various types of damage. In addition, the tire 30 is often used until the end of its service life while sustaining damage.

The tire 30 illustrated in FIG. 2 includes a pair of bead portions 31, a pair of sidewall portions 32, and a tread portion 35 having, in order from the outside in the tire radial direction, an outer layer rubber 33 and an inner layer rubber 34, both connected to the sidewall portions 32. The tire 30 further includes a carcass 36 that extends toroidally between the pair of bead portions 31 and reinforces the bead portions 31, sidewall portions 32, and tread portion 35, and a layer of metal cords 37 disposed on the radially outer side of the crown portion of the carcass 36 and on the radially inner side of the inner layer rubber 34. That is, the outer layer rubber 33, inner layer rubber 34, and the layer of metal cords 37 are arranged in this order from the outside in the radial direction of the tire 30.

Here, the outer layer rubber 33 of the tire 30 illustrated in FIG. 2 is generally referred to as "cap rubber." The inner layer rubber 34 is generally referred to as "base rubber." The layer of metal cords 37 is generally referred to as the "belt."

The carcass 36 of the tire 30 illustrated in FIG. 2 is composed of a single carcass ply formed by coating a plurality of cords arranged in parallel with coating rubber. The carcass 36 includes a main body portion extending toroidally between bead cores 38 embedded in the bead portions 31, and a turn-up portion wound radially outward from the inside to the outside in the tire width direction around each bead core 38. The number of plies and the structure of the carcass 36 are not limited thereto.

Further, the layer of metal cords (belt) 37 of the tire 30 illustrated in FIG. 2 is composed of two belt layers. The number of belt layers constituting the layer of metal cords 37 is not limited to this, and the number of belt layers may be three or more. Here, the belt layer is usually a rubberized layer of metal cords (preferably steel cords) extending obliquely with respect to the tire equatorial plane. The two belt layers are laminated so that the metal cords constituting the belt layers cross each other across the tire equatorial plane, thereby forming the layer of metal cords 37.

The tire 30 includes, in the tread portion 35, the outer layer rubber 33 forming the tread surface of the tread portion 35, the layer of metal cords 37 disposed radially inward of the outer layer rubber 33, and the inner layer rubber 34 located between the outer layer rubber 33 and the layer of metal cords 37. A tread pattern is formed on the surface of the outer layer rubber 33. The rubber layer of the tread portion 35 of the tire 30 is not limited to a two-layer structure of the outer layer rubber 33 and the inner layer rubber 34, and may be a single-layer structure or a structure having three or more layers. The tire damage evaluation apparatus 10 of the present disclosure can be suitably applied to the evaluation of damage in a tire 30 having a tread portion 35 of such a configuration.

### (Method for Segmenting the Surface Region of the Tire)

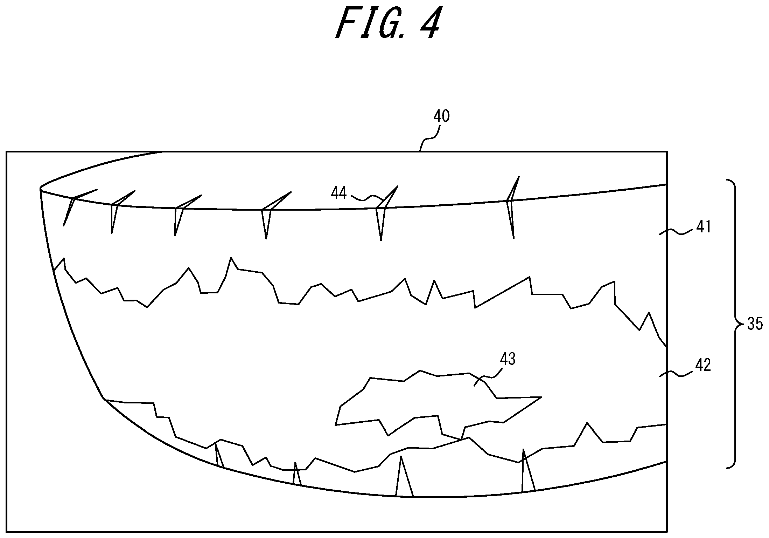

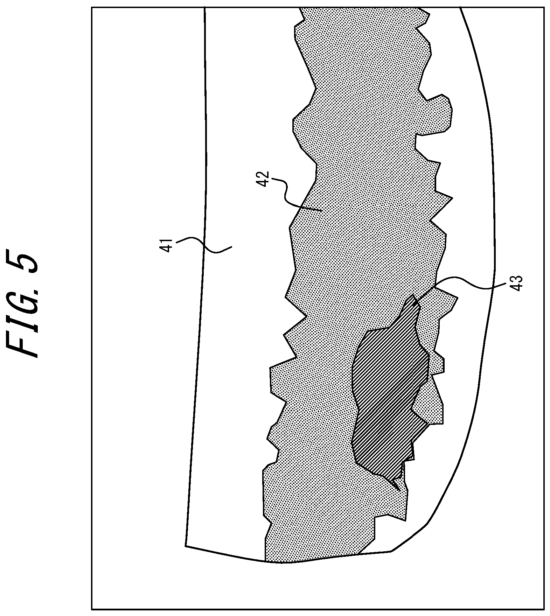

The processor 14 of the tire damage evaluation apparatus 10 acquires, via the communication unit 11 or the input unit 12, a tread image including an image of the tread portion 35 of the tire 30 captured by the imaging device 20. The processor 14 generates a segmented image in which the surface region of the tread portion 35 included in the acquired tread image is segmented by the layer exposed in the surface region. The processor 14 may segment the surface region into a plurality of regions including a first region 41 covered by the outer layer rubber 33, a second region 42 where the inner layer rubber 34 is exposed, and a third region 43 where the layer of metal cords 37 is exposed (see FIGS. 4 and 5).

Various image processing methods can be used to generate the segmented image. In one embodiment, machine learning can be used to generate the segmented image. The processor 14 may be configured to input the tread image to a first trained model, which has been trained by an information processing apparatus for machine learning, and to output a segmented image of the tire 30. The information processing apparatus for machine learning may be the same computer as the tire damage evaluation apparatus 10 or a different computer. In the latter case, the information processing apparatus for machine learning may be configured to be able to communicate with the tire damage evaluation apparatus 10.

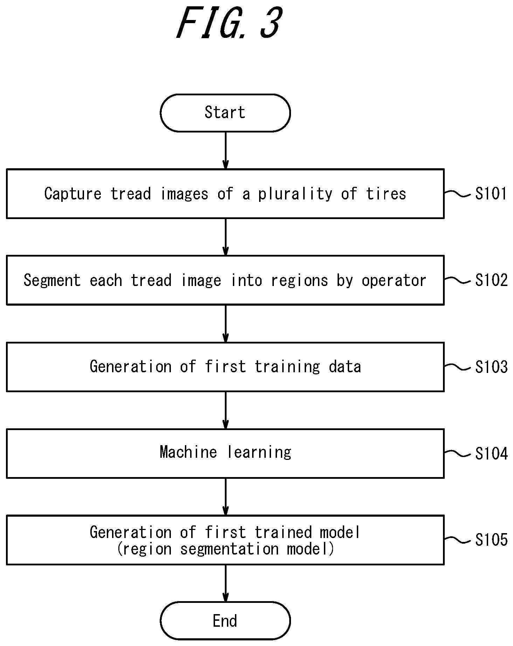

The method for generating the first trained model will be described based on the flowchart in FIG. 3.

First, an operator captures tread images of a plurality of tires (step S101). The plurality of tires captured are referred to as sample tires. The sample tires may include tires in continued use and tires that have reached the end of their service life. Images of sample tires under different conditions are captured and accumulated in large numbers.

The operator segments the surface region of the tread portion 35 in the tread image of each sample tire, on the screen of a work computer, by the layer exposed in the surface region (step S102). The operator may be a skilled technician capable of determining, by viewing the image of the sample tire, which of the outer layer rubber 33, inner layer rubber 34, or the layer of metal cords 37 is exposed in a given region.

Here, the fact that a layer other than the outermost layer of the tire 30 is exposed on the tire surface means that the upper layer has been worn away and lost due to vehicle travel. Therefore, for example, regions where the inner layer rubber 34 or the layer of metal cords 37 is exposed are included in the damaged regions. It can be said that regions where the layer of metal cords 37 is exposed are more severely damaged than regions where the inner layer rubber 34 is exposed.

FIG. 4 illustrates an example of a tread image 40 of a sample tire and segmentation of the surface region by the operator on the tread image 40. As illustrated in FIG. 4, the operator uses a GUI (Graphical User Interface) of the work computer to sequentially specify boundaries on the image of the sample tire's tread portion 35 where different layers are exposed. The boundaries where different layers are exposed include, for example, the boundary between the first region 41, where the outer layer rubber 33 is located at the outermost surface, and the second region 42, where the inner layer rubber 34 is exposed, as well as the boundary between the second region 42 and the third region 43, where the layer of metal cords 37 is exposed. By specifying boundaries so as to enclose the regions where damage has occurred, for example, the second region 42 and the third region 43, the operator generates a segmented image in which the surface region of the tread image 40 is segmented. In this way, the first region 41, the second region 42, and the third region 43 are segmented on the tread image 40 of the sample tire. The work computer may be any computer and may be the same computer as the tire damage evaluation apparatus 10 and/or the information processing apparatus for machine learning.

Next, first training data for machine learning is generated, using the tread image 40 of the sample tire as input and the data of the segmented image in which the surface region of the tread image 40 is segmented as output (step S103). The first training data includes a large number of data generated from a large number of sample tires.

Using the first training data generated in step S103, the information processing apparatus for machine learning performs machine learning (step S104). The information processing apparatus for machine learning is provided with a function approximator capable of learning input-output relationships, and learns the first training data to generate a first trained model (step S105). The first trained model is also referred to as a segmentation model. The function approximator can perform machine learning using known machine learning algorithms such as neural networks or deep learning. The first trained model, when input with a tread image 40 of the tire 30, outputs a segmented image in which the surface region of the tread portion 35 of the tire 30 is segmented. By learning data from more tread images 40 of sample tires, the accuracy of machine learning can be improved, and the accuracy of segmentation of the surface region of the tire can be enhanced.

The first trained model generated according to the flowchart in FIG. 3 is stored in the storage unit 15 of the tire damage evaluation apparatus 10. The processor 14 inputs the tread image 40 of the tire 30 captured by the imaging device 20 to the first trained model read from the storage unit 15, and outputs a segmented image in which the surface region of the tread portion 35 of the tire 30 is segmented, thereby generating a segmented image. The segmented image may be displayed on a display, which is the output unit 13. As a result, the damage state due to wear of the tread portion 35 of the tire 30 is visualized.

FIG. 5 illustrates an example of a segmented image in which a surface region generated from an image of the tread portion 35 is divided. In FIG. 5, a first region 41 in which the outer layer rubber 33 is exposed in the surface region, a second region 42 in which the inner layer rubber 34 is exposed, and a third region 43 in which the metal cord layer 37 is exposed are depicted. Each region may be displayed with a different color. From the area of each region, the user can visually and to some extent quantitatively grasp the degree of damage to the surface region of the tire 30. The processor 14 may quantify the area ratio, which is the ratio of the area of each of the first region 41, the second region 42, and the third region 43 to the entire surface region of the tread portion 35, as a ratio of pixels in the image.

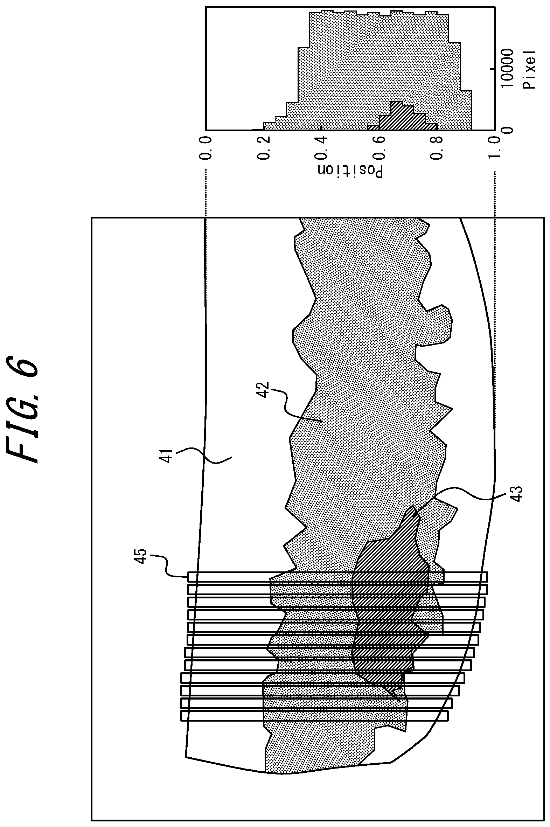

Furthermore, the processor 14 can process the segmented image to identify the position in the width direction of the tire 30 where the inner layer rubber 34 and the metal cord layer 37 are largely exposed. For this purpose, as illustrated in FIG. 6, the processor 14 divides the segmented image of the tire 30 into a plurality of strip-shaped regions 45 that are narrow in the radial direction of the tire 30 and extend long in the width direction of the tire 30. The term "strip-shaped" can also be referred to as "band-shaped" or "strip-like."

The processor 14 aligns the positions of the plurality of strip-shaped regions 45 so that the positions in the width direction of the tread portion 35 of the tire 30 in the strip-shaped regions 45 coincide. FIG. 6 depicts the strip-shaped regions 45 before alignment. Depending on the imaging angle, the tread image 40 of the tire 30 may have positions outside the image center shifted. Also, the width of the tire 30 may appear narrower outside the center of the image. The processor 14 aligns the center positions of the strip-shaped regions 45 and matches the length of the strip-shaped regions 45 in the width direction of the tire 30, that is, the up-down direction in FIG. 6. By this operation, the positions in the width direction of the tire 30 of each strip-shaped region 45 coincide. This operation is referred to as normalization.

Next, the processor 14 generates, on an image formed by arranging the normalized strip-shaped regions 45, a histogram in which, for each position in the width direction of the tire 30, pixels corresponding to one or more of the first region 41, the second region 42, and the third region 43 are accumulated. In the example of FIG. 6, histograms of the second region 42 and the third region 43 are presented on the right side. In this way, the user can grasp the positions and sizes in the width direction of the tire 30 where the inner layer rubber 34 and the metal cord layer 37 are largely exposed. That is, the user can grasp the positions and sizes of regions in the surface region of the tread portion 35 that are extensively damaged due to wear or the like.

### (Extraction of Local Damage Portions on the Tire Surface)

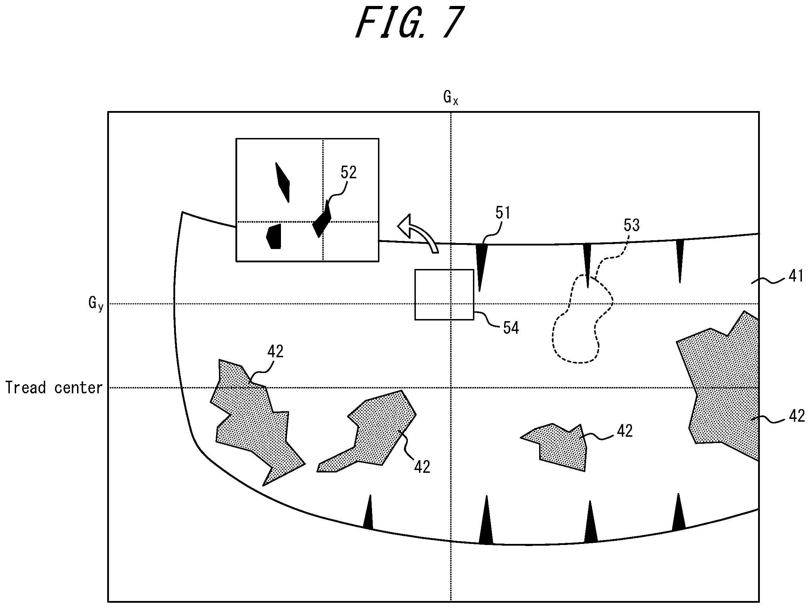

In the above description using FIGS. 3 to 6, the tire damage evaluation apparatus 10 is assumed to generate a segmented image in which the surface region of the tire 30 is divided into regions where the outer layer rubber 33, the inner layer rubber 34, and the metal cord layer 37 are exposed. In addition to these, as illustrated in FIG. 7, the tire damage evaluation apparatus 10 may be configured to extract a groove portion 51 indicating a groove of the tread, a local damage portion 52 including local damage such as chipping, gouging, and cuts, and a repaired portion 53 indicating a previously repaired location. In FIG. 7, the local damage portion 52 included in the small region 54 is enlarged and displayed.

For the extraction of the groove portion 51, the local damage portion 52, and the repaired portion 53, a trained model generated by machine learning similar to that described using the flowchart of FIG. 3 may be used. In particular, even small local damage portions 52 of the tire 30 can affect the progression of wear of the tire 30.

The procedure for extracting the local damage portion 52 will be described. As in the flowchart of FIG. 3, an operator extracts the local damage portion 52 on the tread image 40 of a plurality of sample tires and records the region on the tread image 40. For example, the operator performs a process of filling in chipping on the tread image 40. In this way, second training data can be generated in which the tread image 40 is used as input and the region of the local damage portion 52 on the tread image 40 is used as output. By using the second training data to perform machine learning on an information processing apparatus for machine learning, a second trained model can be generated. The tire damage evaluation apparatus 10 can store the second trained model in the storage unit 15. The processor 14 can execute processing to input the tread image 40 of the tire 30 to the second trained model read from the storage unit 15 and output the local damage portion 52 of the tire 30. By increasing the number of sample tires used to generate the second training data, the accuracy of extracting the local damage portion 52 can be improved.

When the processor 14 extracts the local damage portion 52, it may calculate the barycenter position (Gₓ, G_{y}) of each local damage portion 52. In this way, the processor 14 can present the position and region where the local damage portion 52 exists to the user. The processor 14 may further calculate the area ratio, which is the ratio of the total area of the local damage portions 52 to the area of the entire surface region of the tread portion 35. Thus, the processor 14 can quantify the size of the local damage portion 52.

In the above description, the second trained model is assumed to output information on the local damage portion 52 by inputting the tread image 40. The second trained model may be configured to output, in addition to or instead of the local damage portion 52, the groove portion 51 and/or the repaired portion 53. Information on the groove portion 51 and the repaired portion 53 may be appropriately used for evaluating the damage state of the tire.

The first trained model and the second trained model may be generated as a single integrated trained model rather than as different trained models. By inputting the tread image 40 to the tire damage evaluation apparatus 10, the processor 14 may be configured to generate a segmented image and extract minute local damage portions 52 present on the first region 41 of the segmented image. By continuously monitoring the local damage portions 52, the user can monitor the process by which minute local damage portions 52 lead to significant wear of the tire 30. The user can observe the relationship between the shape of the tread pattern of the tread portion 35 and the progression of wear of the tire 30, and utilize the observation results in the design of the tread pattern of the tire 30.

### (Detection of Minor Damage Levels)

Even in regions of the tire 30 surface where the inner layer rubber 34 or the metal cord layer 37 is not exposed, that is, in regions of the outer layer rubber 33, there may be numerous fine scratches that are difficult to individually identify. In one embodiment, the tire damage evaluation apparatus 10 can quantify relatively small damage states such as scratches in the tread portion 35 of the tire 30. The damage state of the surface region of the tire 30 can be determined by analyzing the tread image 40 through image processing. In one embodiment, machine learning can be used in the determination of the damage state.

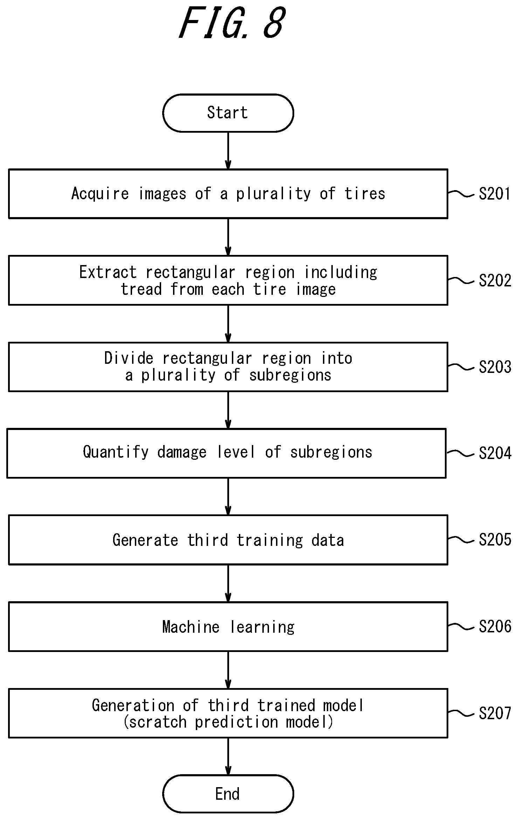

FIG. 8 is a flowchart illustrating a method for generating a third trained model for evaluating the damage state of the tire 30 by machine learning based on the tread image 40. The processing in the flowchart of FIG. 8 may be executed by an information processing apparatus for machine learning. This information processing apparatus for machine learning may be the same computer or a different computer from the information processing apparatus for machine learning used to generate the first trained model and/or the second trained model.

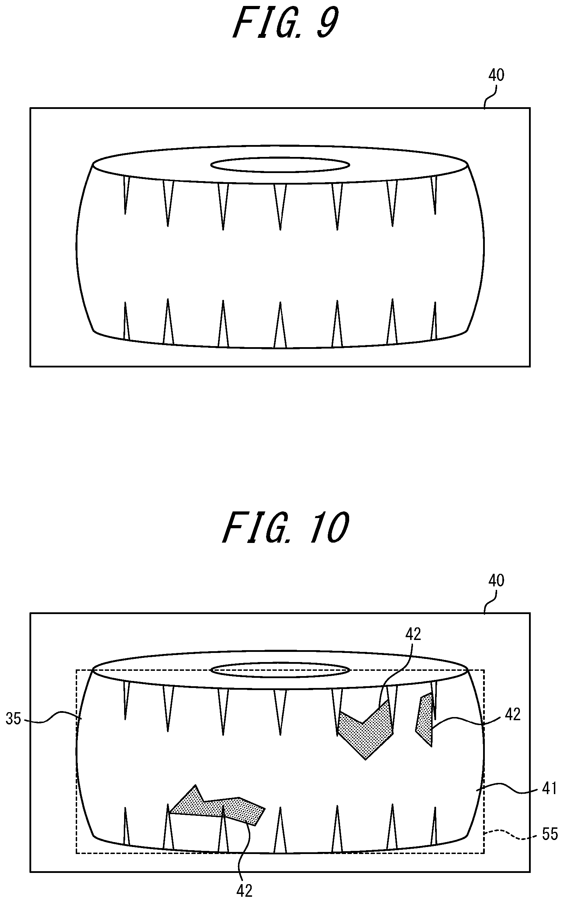

First, the information processing apparatus for machine learning acquires tread images 40 of a plurality of sample tires imaged by an operator (step S201). FIG. 9 is a diagram depicting the tread image 40 of a sample tire thus acquired. It is desirable that the tread images of the plurality of sample tires be imaged at similar angles and magnifications so as to include the entire tire.

Next, a rectangular region 55 including the tread portion 35 is extracted from the tread image 40 of the sample tire (step S202). The rectangular region 55 may be extracted as the smallest rectangle including the tread portion 35 in the image of the sample tire. In one embodiment, to identify the tread portion 35 of the sample tire, the tread image 40 may be input to the first trained model to output a segmented image. By using the first trained model, as illustrated in FIG. 10, the tread portion 35 including the first region 41, the second region 42, and the third region 43 (not displayed in FIG. 10) is extracted from the tread image 40 of the sample tire. In the example of FIG. 10, the surface region of the sample tire is mainly the first region 41 where the outer layer rubber 33 is exposed, and a part is the second region 42 where the inner layer rubber 34 is exposed. The rectangular region 55 is determined so as to include the first region 41.

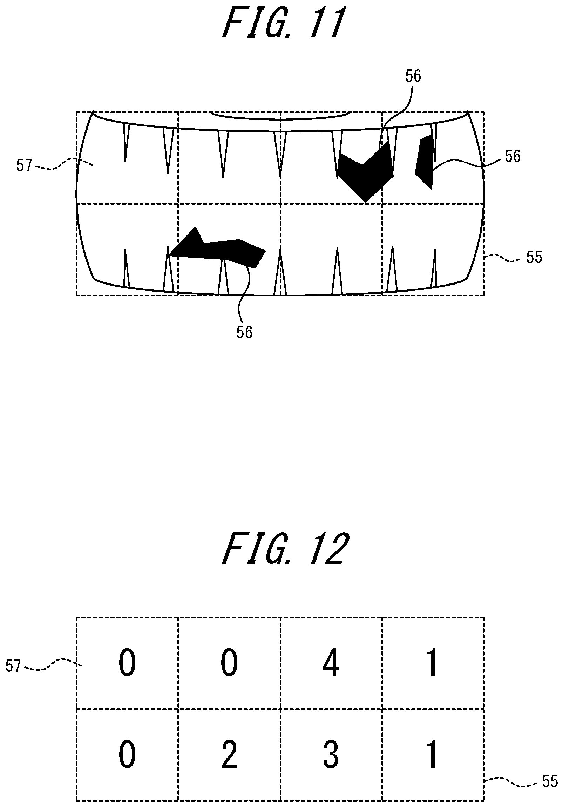

Next, the information processing apparatus for machine learning divides the extracted rectangular region 55 into n × m subregions 57 in the vertical and horizontal directions. For example, in the example of FIG. 11, the segmented region is divided into eight subregions 57 in a 2 × 4 arrangement. n and m can be set to any natural numbers. In one embodiment, the information processing apparatus for machine learning may apply a mask 56 to exclude regions with large damage in the rectangular region 55 from subsequent processing. Regions with large damage include, for example, the second region 42 and the third region 43 determined to be regions where the inner layer rubber 34 or the metal cord layer 37 is exposed when analyzed using the first trained model. In other embodiments, regions with large damage may include regions where the local damage portion 52 is extracted when analyzed using the second trained model.

In this way, for each divided subregion 57, the operator determines the damage level according to a predetermined criterion and quantifies it (step S204). As illustrated in FIG. 12, the damage level may be determined in five stages from 0 to 4. For example, damage level 0 indicates that scratches are minimal, and damage level 4 indicates that scratches are significant. The predetermined criterion may include the number of scratches within the subregion 57 or per unit area, and criteria regarding the depth of the scratches. Since there are many minute scratches in the surface region of the tread portion 35 of the sample tire, unlike the method for generating the first trained model and the second trained model, the operator does not extract individual scratches. The information processing apparatus for machine learning acquires data in which the damage level determined by the operator is quantified.

By creating and accumulating a large number of data sets in which the tread image 40 is used as input and the quantified data of the damage level of each subregion 57 of the tread image 40 is used as output, third training data is generated (step S205).

The information processing apparatus for machine learning performs machine learning using the third training data generated in step S205 (step S206). The information processing apparatus for machine learning includes a function approximator capable of learning the input-output relationship, and generates a third trained model by learning the third training data (step S207). The third trained model may also be referred to as a scratch prediction model. When the third trained model is input with the tread image 40 of the tire 30, it outputs a numerical value indicating the damage state of each subregion 57 segmented in the surface region of the tread portion 35 of the tire 30. In this way, it becomes possible to objectively evaluate the damage state of the surface region, such as scratches that are difficult to determine by visual inspection of the surface region of the tire 30. By increasing the number of sample tires used to generate the third training data, the accuracy of evaluating the local state can be improved.

The third trained model generated according to the flowchart of FIG. 8 is stored in the storage unit 15 of the tire damage evaluation apparatus 10. The processor 14 can input the tread image 40 of the tire 30 captured by the imaging device 20 to the third trained model and output information quantifying the damage state of each subregion 57 segmented in the surface region of the tread portion 35. In this way, the tire damage evaluation apparatus 10 can evaluate the damage state of the surface region according to the position of the divided subregions 57 of the surface region of the tread portion 35. The processor 14 may execute this processing for the first region 41 portion, which is the outermost layer of the tread portion 35 of the tire 30. Note that the information quantifying the damage state output by the third trained model can be output as a finer numerical value than the damage level determined by the operator in step S204. For example, if the operator determines the damage state as a natural number from 0 to 4 in step S204, the information quantifying the damage state output by the third trained model may include decimals between 0 and 4. The processor 14 may convert the information quantifying the damage state including decimals into integer values, for example, from 1 to 100.

### (Tire Damage Evaluation Processing)

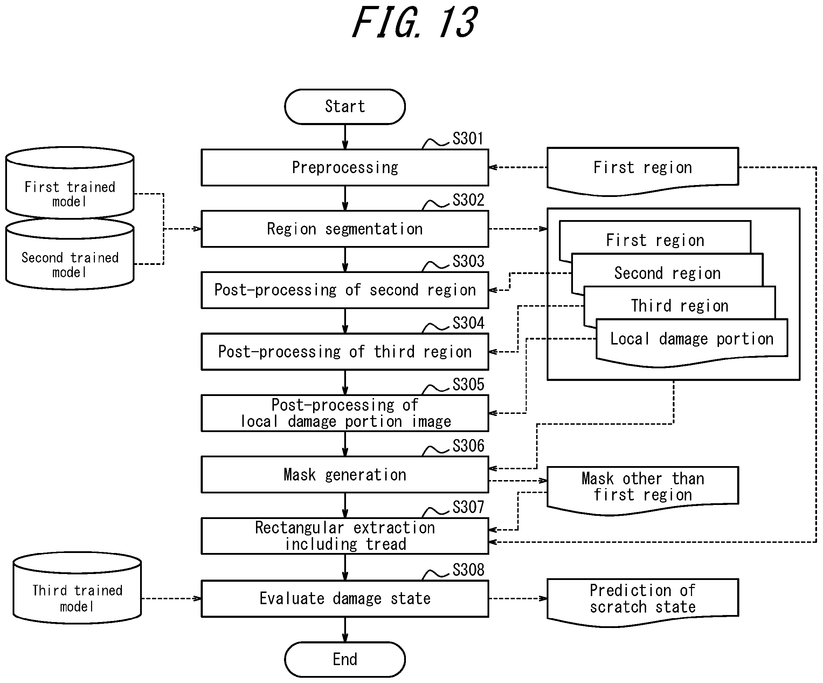

Next, an example of a series of processes in a tire damage evaluation method executed by the processor 14 of the tire damage evaluation apparatus 10 that has acquired an image of the tire 30 imaged will be described with reference to the flowchart of FIG. 13. The tire damage evaluation apparatus 10 may execute all the processes in the flowchart of FIG. 13, or may execute only some of the processes.

First, the processor 14 acquires the tread image 40 obtained by imaging the tread portion 35 of the tire 30 via the communication unit 11 or the input unit 12. The processor 14 performs preprocessing necessary for the following processing on the tread image 40 (step S301). The preprocessing includes processing to standardize the size of the acquired image. For this purpose, in the preprocessing, the processor 14 may compress or expand the image.

Next, the processor 14 inputs the tread image 40 to the first trained model and the second trained model, and segments the tread image 40 into a segmented image including the first region 41 to the third region 43 (step S302). The segmentation in step S302 includes extracting the local damage portion 52. In this way, the processor 14 can generate a segmented image as illustrated in FIG. 5 and extract the local damage portion 52 as illustrated in FIG. 7. The processor 14 can display each region of the segmented image in different colors on a display, which is a display unit included in the output unit 13. The processor 14 stores information on each region and information on the local damage portion 52 in the storage unit 15.

The processor 14 performs post-processing on the image of the second region 42, which is a region where the inner layer rubber 34 is exposed (step S303). For example, the processor 14 can generate a histogram indicating the distribution in the width direction of the tire 30 of the pixels of the second region 42, as described with reference to FIG. 6. Also, for example, the processor 14 can calculate the size and/or area ratio of the second region 42 occupying the surface region of the tread portion 35 of the tire 30. The processor 14 outputs the position, size, and/or area ratio of the second region 42 in the surface region of the tread portion 35 of the tire 30 via the output unit 13, or stores them in the storage unit 15.

The processor 14 performs post-processing on the image of the third region 43, which is a region where the metal cord layer 17 is exposed, in the same manner as for the image of the second region 42 (step S304). The sizes of the second region 42 and the third region 43 quantitatively indicate regions where the surface of the tire 30 is extensively damaged.

The processor 14 performs post-processing on the image of the local damage portion 52, such as chipping, output by inputting the tread image 40 to the second trained model (step S305). The post-processing of the local damage portion 52 may include, as described with reference to FIG. 7, calculation of the barycenter position of the local damage portion 52 and calculation of the area ratio of the region of the local damage portion 52 to the area of the surface region of the tread portion 35 of the tire 30. The processor 14 stores this information on the barycenter position and area ratio in the storage unit 15.

Next, the processor 14 generates a mask 56 that covers the second region 42, the third region 43, and the local damage portion 52 on the tread image 40 (step S306). This mask 56 is similar to the mask 56 applied to the tread image 40 of the sample tire when generating the third training data. The mask 56 is for excluding the second region 42, the third region 43, and the local damage portion 52, which are regions with severe damage, from the evaluation target region in the following processing for determining relatively minor damage states such as scratches.

The processor 14 extracts a rectangular region 55 including the tread portion 35 of the tire 30 from the tread image 40, as in FIG. 10 (step S307). By generating the segmented region in step S302, the processor 14 can recognize the range of the tread portion 35. The processor 14 may also apply the mask 56 generated in step S306 to the rectangular region 55. In this way, regions other than the first region 41, where the outer layer rubber 33 is exposed on the surface, are masked.

The processor 14 evaluates the damage state of the surface region of the tire 30 (step S308). Specifically, the processor 14 inputs the image of the rectangular region 55 extracted in step S307 to the third trained model and acquires, as output, numerical values indicating the damage state of each subregion 57. The processor 14 can display the numerical values indicating the damage state of each subregion 57 output on a display included in the output unit 13 and store them in the storage unit 15.

As described above, the tire damage evaluation apparatus 10 can output information of the following evaluation results in which the damage state of the surface region of the tread portion 35 is quantified according to the procedure of the flowchart in FIG. 13.
(1) An image indicating the exposure state of each of a plurality of layers of the tread portion 35 of the tire 30, stratified according to wear of the tread portion 35, and quantitative data such as the area of the region where each layer is exposed;
(2) An image indicating local damage portions 52 such as chipping occurring in the tread portion 35 of the tire 30, the number of local damage portions 52, the barycenter position of each local damage portion 52, and the area ratio occupied by the local damage portions 52 in the tread portion 35;
(3) An index quantifying minor damage states such as scratches occurring in the surface region of the outer layer rubber 33 or the like, which is the outermost layer of the tread portion 35.

In this way, the tire damage evaluation apparatus 10 of the present disclosure can quantify and evaluate the surface state of the tread portion 35 of the tire 30. The tire damage evaluation apparatus 10 may display the information of the evaluation results on the display unit of the output unit 13 and/or transmit it to an external device via the communication unit 11. Accordingly, the tire damage evaluation apparatus 10 can provide the damage state of the surface region of the tread portion 35 to the user in a manner that is easy for the user to utilize.

The processor 14 of the tire damage evaluation apparatus 10 can further estimate the wear characteristics of the tire 30 based on the information of the local damage portions 52 such as chipping and the information of the damage state due to scratches or the like that have been output. By using the tire damage evaluation apparatus 10, the user can analyze the relationship between the material of the tire 30 and/or the shape of the tread pattern and the wear of the tire. In addition, by using the information output by the tire damage evaluation apparatus 10, the user can predict the lifetime of the tire 30.

### (Other Configuration Example of Tire Damage Evaluation System)

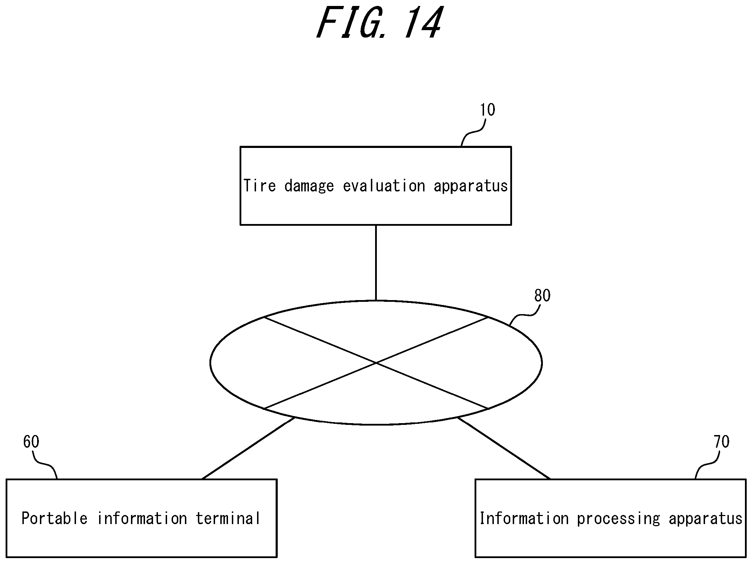

The tire damage evaluation system 1 illustrated in FIG. 1 is configured from the tire damage evaluation apparatus 10 and the imaging device 20. FIG. 14 illustrates another configuration example of the tire damage evaluation system 1. In the embodiment of FIG. 14, the tire damage evaluation apparatus 10 is disposed at a location remote from the user side, for example, on a cloud. The tire damage evaluation apparatus 10 is configured to be able to communicate with the portable information terminal 60 and the information processing apparatus 70 on the user side via a network 80 such as the Internet.

The portable information terminal 60 includes, for example, a smartphone and a tablet terminal. The information processing apparatus 70 is a computer such as a PC. The portable information terminal 60 and the information processing apparatus 70, similar to the tire damage evaluation apparatus 10, may include constituent elements such as a communication unit, an input unit, an output unit, a processor, and a storage unit. The portable information terminal 60 may further include an imaging unit.

The portable information terminal 60 may be configured to transmit the tread image 40 of the tire 30, captured by the imaging unit, to the tire damage evaluation apparatus 10. Therefore, the portable information terminal 60 functions as the imaging device 20 of the tire damage evaluation system 1 in FIG. 1. In addition, the portable information terminal 60 may acquire and execute an application corresponding to the tire damage evaluation system 1. The user of the portable information terminal 60 may capture an image of the tire 30 and transmit it to the tire damage evaluation apparatus 10 according to the guidance of the application.

The information processing apparatus 70 may acquire the evaluation results by the tire damage evaluation apparatus 10 and display them on a display, which is an output unit. The information processing apparatus 70 may store the evaluation results of the tire damage evaluation apparatus 10 in the storage unit. The information processing apparatus 70 may perform further analysis using the evaluation results accumulated in the storage unit. The information processing apparatus 70 may analyze and evaluate the damage of the tire 30 while transmitting and receiving information with the tire damage evaluation apparatus 10 using a dedicated application stored in the storage unit.

Although embodiments according to the present disclosure have been described based on the drawings and examples, it should be noted that various modifications or alterations can be easily made based on the present disclosure by those skilled in the art. Therefore, it should be understood that such modifications or alterations are included within the scope of the present disclosure. For example, the functions included in each constituent part or each step can be rearranged so as not to be logically inconsistent, and a plurality of constituent parts or steps can be combined into one or divided. The embodiments according to the present disclosure can also be realized as a method executed by a processor provided in the apparatus, a program, or a storage medium recording the program. It should be understood that these are also included within the scope of the present disclosure.

### [Contribution to the Sustainable Development Goals (SDGs) Led by the United Nations]

SDGs have been advocated for the realization of a sustainable society. One embodiment of the present invention can be a technology that contributes to, for example, "No. 9 Build resilient infrastructure, promote inclusive and sustainable industrialization and foster innovation."

### REFERENCE SIGNS LIST

- 10: Tire damage evaluation apparatus
- 11: Communication unit
- 12: Input unit
- 13: Output unit (display unit)
- 14: Processor
- 15: Storage unit
- 20: Imaging device
- 30: Tire
- 31: Bead portion
- 32: Sidewall portion
- 33: Outer layer rubber
- 34: Inner layer rubber
- 35: Tread portion
- 36: Carcass
- 37: Layer of metal cords
- 38: Bead core
- 40: Tread image
- 41: First region
- 42: Second region
- 43: Third region
- 45: Strip-shaped region
- 51: Groove portion
- 52: Local damage portion
- 53: Repaired portion
- 54: Small region
- 55: Rectangular region
- 56: Mask
- 57: Subregion
- 60: Portable information terminal
- 70: Information processing apparatus
- 80: Network

## Claims

1. A tire damage evaluation apparatus comprising a processor configured to acquire a tread image obtained by imaging a tread portion of a tire and to quantify a damage state of a surface region of the tread portion based on the tread image.

2. The tire damage evaluation apparatus according to claim 1, wherein the tread portion comprises a plurality of layers arranged in a radial direction of the tire, and the processor is configured to generate a segmented image in which the surface region of the tread portion included in the tread image is segmented by a layer exposed in the surface region.

3. The tire damage evaluation apparatus according to claim 2, wherein the plurality of layers comprises an outer layer rubber configuring a tread surface of the tread portion, a metal cord layer disposed inward in the radial direction of the tire from the outer layer rubber, and an inner layer rubber positioned between the outer layer rubber and the metal cord layer.

4. The tire damage evaluation apparatus according to claim 2, wherein the processor is configured to execute processing to input the tread image of the tire to a first trained model, trained using first training data having tread images of a plurality of sample tires as input and segmented images obtained by segmenting a surface region of the sample tires included in the tread images by a layer exposed on the surface as output, and to output the segmented image of the tire.

5. The tire damage evaluation apparatus according to claim 2, wherein the processor is configured to divide the segmented image of the tire into a plurality of strip-shaped regions extending in a width direction of the tire, to align positions of the plurality of strip-shaped regions so that positions in the width direction of the tread portion in the strip-shaped regions coincide, and to generate a histogram obtained by accumulating pixels of the plurality of strip-shaped regions for at least one layer exposed in the surface region at each position in the width direction.

6. The tire damage evaluation apparatus according to claim 1, wherein the processor is configured to extract from the tread image at least one of a groove portion indicating a groove of the tread portion, a local damage portion indicating local damage of the surface region of the tread portion, and a repaired portion indicating a location of repaired damage that occurred previously in the tire.

7. The tire damage evaluation apparatus according to claim 1, wherein the processor is configured to execute processing to input the tread image of the tire to a second trained model, trained using second training data having tread images of a plurality of sample tires as input and images of a local damage portion indicating local damage of a tread portion of the sample tires included in the tread images as output, and to output an image of the local damage portion of the tire.

8. The tire damage evaluation apparatus according to claim 7, wherein the processor is configured to calculate a ratio of an area of a region of the local damage portion to an area of the surface region of the tread portion.

9. The tire damage evaluation apparatus according to claim 7, wherein the processor is configured to calculate a center of gravity of a region of the local damage portion.

10. The tire damage evaluation apparatus according to claim 2, wherein the processor is configured to quantify the damage state of the surface region of the tire, based on the tread image, in a portion in which an outermost layer of the tire, among the plurality of layers, is exposed.

11. The tire damage evaluation apparatus according to claim 10, wherein the processor is configured to extract an image of a region including the surface region of the tread portion from the tread image, to divide the image into images of a plurality of subregions, and to quantify the damage state of the surface region for the image of each subregion.

12. The tire damage evaluation apparatus according to claim 10, wherein the processor is configured to execute processing to input the tread image of the tire to a third trained model, trained using third training data having tread images of a plurality of sample tires as input and information quantifying the damage state of the surface region in a portion in which an outermost layer of the tire, among the plurality of layers included in the tread image, is exposed as output, and to output information quantifying the damage state of the surface region.

13. The tire damage evaluation apparatus according to claim 12, wherein the damage state of the surface region in the third training data is quantified based on at least one of a number of scratches included in the surface region and a depth of the scratches.

14. The tire damage evaluation apparatus according to claim 1, wherein the damage state includes a state of chipping and scratches of the tire, and the processor is configured to estimate a wear characteristic of the tire based on information quantifying the state of the chipping and the scratches.

15. The tire damage evaluation apparatus according to claim 1, comprising at least one of a display configured to display information quantifying the damage state of the surface region of the tread portion and a communication interface configured to transmit the information to an external apparatus.

16. A tire damage evaluation method to be executed by an information processing apparatus, comprising:
acquiring a tread image obtained by imaging a tread portion of a tire; and
quantifying a damage state of a surface region of the tread portion based on the tread image.

17. A tire damage evaluation program configured to cause a computer to execute processing to acquire a tread image obtained by imaging a tread portion of a tire and processing to quantify a damage state of a surface region of the tread portion based on the tread image.
